# EUROPÄISCHE PATENTANMELDUNG

(11) **EP 0 995 774 A1**
(43) Veröffentlichungstag der Anmeldung: **26.04.2000**
(21) Anmeldenummer: 99115209.1
(22) Anmeldetag: 31.07.1999
(51) Int. Cl.: C08K 3/22, C01G 23/07

(54) **Verfahren zur Verbesserung der Stabilität von Polymeren**

(30) Priorität: 21.10.1998 DE 19848480
(71) Anmelder: Degussa-Hüls Aktiengesellschaft, 60311 Frankfurt am Main (DE)
(72) Erfinder: Mangold, Helmut, Dr., 63517 Rodenbach (DE); Scholz, Mario, Dr., 63584 Gründau (DE); Schachtely, Uwe, 63517 Rodenbach (DE); Deller, Klaus, Dr., 63512 Hainburg (DE)

(57) **Zusammenfassung**

Die Stabilität von Polymeren gegenüber Hitze- und Flammeneinwirkung wird verbessert, indem man den Polymeren ein pyrogen hergestelltes eisenoxidhaltiges Titandioxid zusetzt.

## Beschreibung

Die Erfindung betrifft ein Verfahren zu Verbesserung der Stabilität von Polymeren gegenüber Hitze- und Flammeneinwirkung.

Es ist bekannt, pyrogen hergestelltes Titandioxid in Silikonkautschuk einzusetzen (Schriftenreihe Pigmente Nr. 56 Degussa Aktiengesellschaft 1989, Seite 27).

Gegenstand der Erfindung ist ein Verfahren zur Verbesserung der Stabilität von Polymeren gegenüber Hitze- und Flammeneinwirkung, welches dadurch gekennzeichnet ist, daß man den Polymeren vor oder während der Verarbeitung ein pyrogen hergestelltes eisenoxidhaltiges Titandioxid mit einem Gehalt an Eisenoxid von 0,05 bis 50 Gew.-% zusetzt.

Als Polymere können Silikonkautschuk, Siliconöl, synthetische und/oder natürliche Kautschuke oder Gummi verwendet werden.

Das eisenoxidhaltige Titandioxid kann zum Beispiel vor oder während der Vulkanisation oder Vernetzung den Polymeren zugesetzt werden.

In einer bevorzugten Ausführungsform der Erfindung kann ein eisenoxidhaltiges Titandioxid, wie es in dem Dokument EP-B 0 609 533 beschrieben wird, eingesetzt werden.

Das pyrogen hergestellte eisenoxidhaltige Titandioxid kann in einer Menge von 0,05 bis 20 Gew.-%, vorzugsweise 0,5 bis 2,5 Gew.-%, den Polymeren zugesetzt werden.

Das erfindungsgemäße Verfahren hat den Vorteil, daß die Polymere eine verbesserte Stabilität gegenüber Hitze- und Flammeneinwirkung aufweisen. Das bedeutet, daß die Abspaltung von organischen Materialien bei höheren Temperaturen deutlich verringert ist.

Hierdurch wird zusätzlich eine verbesserte Flammschutzwirkung erzielt.

### Beispiel 1:

### (Kein Zusatz von pyrogenem Titandioxid, Nullprobe)

Ansatz eines 2-Komponenten-Silikon-Kautschuks (Liquid-Silicone-Rubber) ohne Zusatz von Titandioxid (Nullprobe). Als Basiskomponente wird ein Zwei-Komponenten-Silikon-Kautschuk der Fa. Bayer, Handelsname Silopren LSR 2040 eingesetzt. (Additionsvernetzend).

Nach homogenem Vermischen der beiden Komponenten mit einem Dissolver findet die Vulkanisation bei 180 °C für 10 min statt.

Es werden Probenplatten (ca. 10 x 15 cm) von 6 mm Stärke hergestellt.

Die Probeplatten werden bei 80 °C im Ofen bis zur Gewichtskonstanz konditioniert (ca. 1 Tag).

Zur Überprüfung der Stabilität gegenüber Hitze wird eine Warmlagerung durchgeführt.

Dabei wird ein Probestreifen von 5 x 7 cm im Umluftofen bei 275 °C gelagert.

An diesem Probestreifen werden nach verschiedenen Lagerzeiten der Gewichtsverlust, die Shore-Härte A und die Rückprallelastizität gemessen.

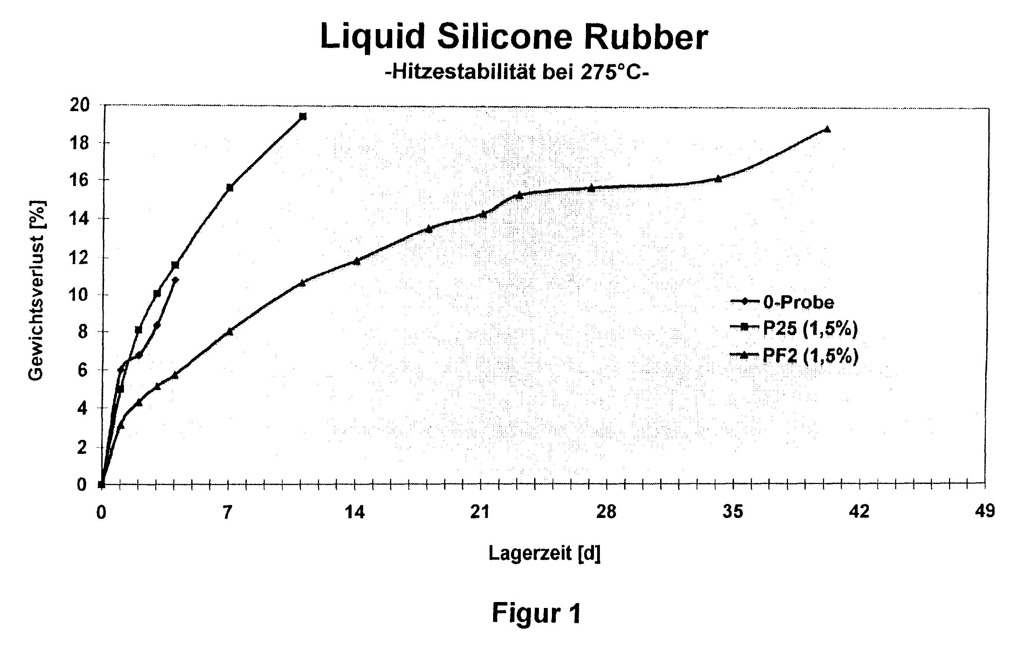

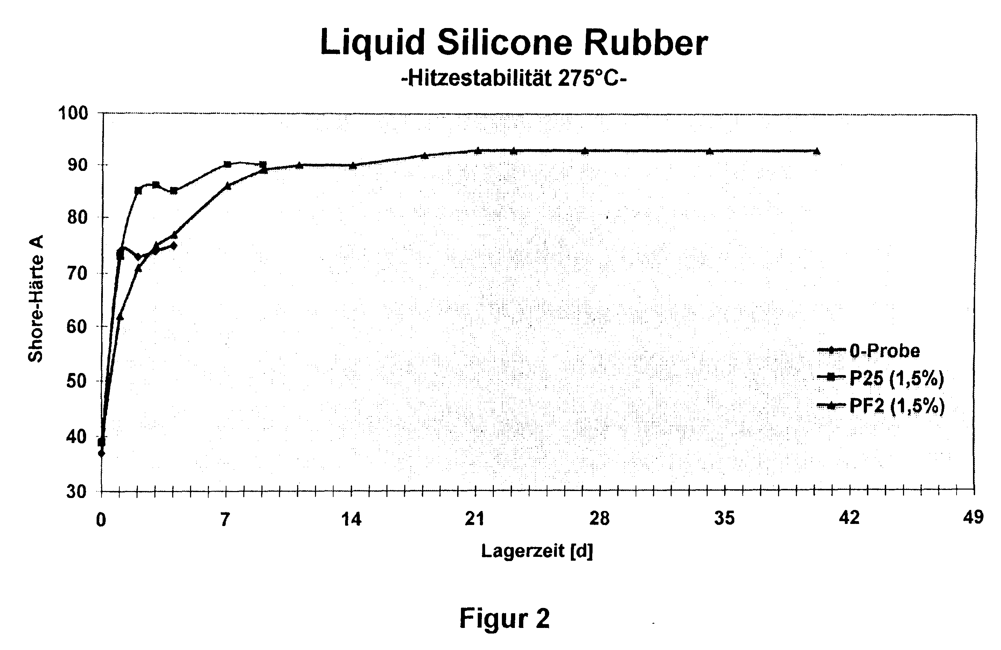

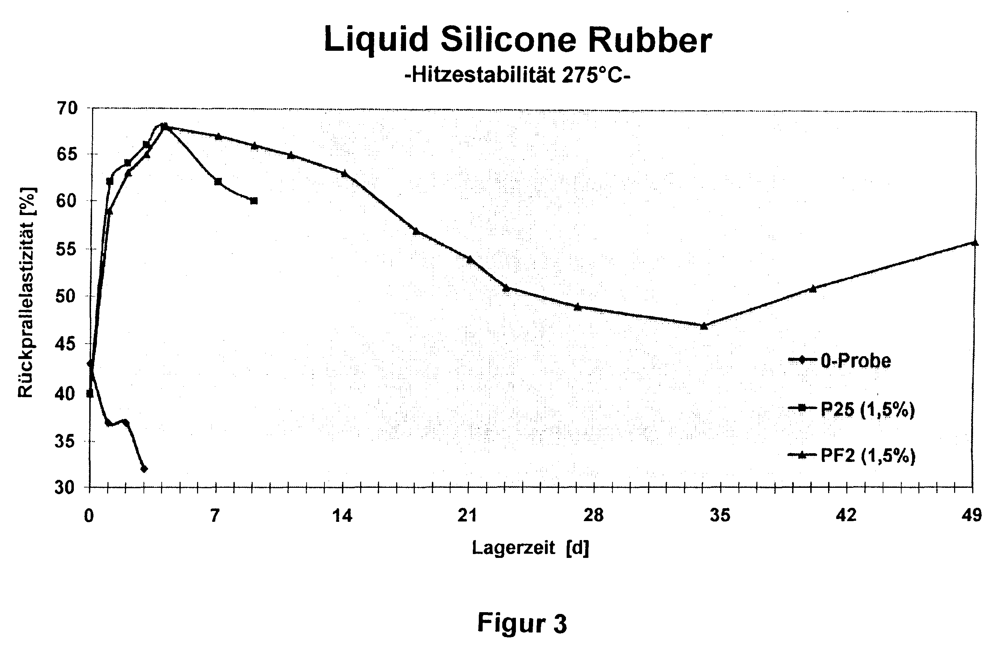

Die Ergebnisse sind in den Figuren 1 bis 3 graphisch dargestellt.

Dabei stellt man fest, daß die Probe ohne Hitzeschutzstabilisierung bereits nach 4 Tagen Warmlagerung verglast und zersplittert, das heißt zerstört, ist.

### Beispiel 2:

### (Zusatz von pyrogenem Titandioxid)

Als Basiskomponente wird ein Zwei-Komponenten-Silikon-Kautschuk der Fa. Bayer, Handelsname Silopren LSR 2040 eingesetzt (Additionsvernetzend).

In eine der Komponenten wird (bezogen auf den Gesamtansatz) 1,5 Gew.% pyrogenes Titandioxid (Titandioxid P 25 S, Degussa AG Frankfurt) mit einem Dissolver 5 min eingearbeitet. Danach findet, wie in Beispiel 1 beschrieben, die Vulkanisation und Herstellung der Probeplatten statt.

Probestreifen von 5x7 cm werden bei 275 °C gelagert. Es wird der Gewichtsverlust, die Shore-Härte A und die Rückprallelastizität der Probe gemessen.

Die Proben verglasen innerhalb von 8 bis 11 Tagen.

Die Ergebnisse sind in den Figuren 1 bis 3 graphisch dargestellt.

### Beispiel 3:

### (Zusatz von eisenoxidhaltigem pyrogenem Titandioxid gemäß Erfindung)

Als Basiskomponente wird ein Zwei-Komponenten-Silikon-Kautschuk der Fa. Bayer, Handelsname Silopren LSR 2040 eingesetzt (Additionsvernetzend).

In eine der Komponenten wird (bezogen auf den Gesamtansatz) 1,5 Gew.% pyrogenes eisenoxidhaltiges Titandioxid (Name VP PF 2; beschrieben in EP-B 0 609 533; Hersteller Degussa AG Frankfurt), mit einem Dissolver 5 min eingearbeitet. Danach findet, wie in Beispiel 1 beschrieben, die Vulkanisation und Herstellung der Probeplatten statt.

Nach verschiedenen Lagerzeiten bei 275 °C wird der Gewichtsverlust, die Shore-Härte A und die Rückprallelastizität der Probe gemessen.

Die Ergebnisse sind in den Figuren 1 bis 3 graphisch dargestellt.

Bei diesen Proben tritt innerhalb einer Lagerzeit von bis zu 7 Wochen keine Verglasung ein.

Die physikalisch-chemischen Daten des eingesetzten pyrogenen eisenoxidhaltigen Titandioxids sind in Tabelle 2 angegeben.

**Tabelle 1**

| Vergleich des Warmlagerverhaltens von Liquid Silicone Rubber LSR bei 275 °C | | |
|---|---|---|
| LSR ohne Titandioxid gemäß Beispiel 1 | LSR mit 1,5 Gew.% pyrogenem Titandioxid P 25 gemäß Beispiel 2 | LSR mit 1,5 Gew.% pyrogenem eisenoxidhaltigem Titandioxid VP PF2 gemäß Beispiel 3 |
| Verglasung (Zerstörung nach 4Tagen) | Verglasung nach ca. 8 bis 11 Tagen | keine Verglasung innerhalb von 49 Tagen |
| | Gewichtsverlust nach 7 Tagen: ca. 16 Gew.% | Gewichtsverlust nach 7 Tagen: ca. 8 Gew.% |

**Tabelle 2**

| Vergleich der physiko-chemischen Daten von VP PF 2 und P 25 | | |
|---|---|---|
| | P 25 | VP PF 2 |
| TiO₂ [Gew.%] | >99,5 | >94 |
| Fe₂O₃ [Gew.%] | <0,01 | 2 ± 1 |
| BET-Oberfläche [m²/g] | 50 ± 15 | 50 ± 15 |
| Röntgenstruktur | überwiegend Anatas | überwiegend Anatas |
| mittlere Größe der Primärteilchen [nm] | 30 | 30 |
| Farbe | weiß | gelblich |

Die Herstellung des pyrogenen eisenoxidhaltigen Titandioxids (VP PF 2) erfolgt wie im Patent EP 0 609 533 beim dortigen Beispiel Nr. 2 beschrieben, mit der einzigen Änderung, daß der Durchsatz an FeCl3 auf 30 g/h reduziert wurde, so daß ein Eisenoxidgehalt im pyrogen hergestellten Produkt von 2,0 Gew.% Fe₂O₃ resultiert.

Beurteilung: Aus den Figuren 1 bis 3, insbesondere aus der Kurve der Figur 1 (Gewichtsverlust, d.h. Abspaltung organischen Materials aus dem Silikonpolymeren) läßt sich deutlich die Verbesserung des Hitzeschutzes (Stabilität gegenüber Hitze) durch das eisenoxidhaltige Titandioxid ablesen.

## Patentansprüche

1. Verfahren zur Verbesserung der Stabilität von Polymeren gegenüber Hitze- und Flammeneinwirkung, dadurch gekennzeichnet, daß man den Polymeren vor oder während der Verarbeitung ein pyrogen hergestelltes eisenoxidhaltiges Titandioxid mit einem Gehalt an Eisenoxid von 0,05 bis 50 Gew.-% zusetzt.

2. Verfahren nach Anspruch 1, dadurch gekennzeichnet, daß man das eisenoxidhaltige Titandioxid vor oder während der Vulkanisation oder Vernetzung den Polymeren zusetzt.
